(19) Europäisches Patentamt
European Patent Office
Office européen des brevets

(11) EP 1 849 833 A1

(12) **EUROPEAN PATENT APPLICATION**
published in accordance with Art. 158(3) EPC

(43) Date of publication:
**31.10.2007 Bulletin 2007/44**

(21) Application number: **06714487.3**

(22) Date of filing: **17.02.2006**

(51) Int Cl.:
***C08L 67/04*** *(2006.01)* ***B05D 7/24*** *(2006.01)*
***C08J 3/03*** *(2006.01)* ***C08J 5/18*** *(2006.01)*
***C09D 167/04*** *(2006.01)* ***C08L 101/16*** *(2006.01)*

(86) International application number:
**PCT/JP2006/303347**

(87) International publication number:
**WO 2006/088241 (24.08.2006 Gazette 2006/34)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.02.2005 JP 2005080382**

(71) Applicants:
- **TEIJIN LIMITED**
  **Osaka-shi**
  **Osaka 541-0054 (JP)**
- **Musashino Chemical Laborarory Ltd.**
  **Tokyo 104-0031 (JP)**
- **Mutual Corporation**
  **Chuo-ku, Osaka-shi**
  **Osaka, 541-0058 (JP)**
- **Kimura, Yoshiharu**
  **Shiga 523-0891 (JP)**

(72) Inventors:
- **TEIJIN LIMITED**
  **Osaka-shi**
  **Osaka 541-0054 (JP)**
- **Musashino Chemical Laborarory Ltd.**
  **Tokyo 104-0031 (JP)**
- **Mutual Corporation**
  **Chuo-ku, Osaka-shi**
  **Osaka, 541-0058 (JP)**
- **Kimura, Yoshiharu**
  **Shiga 523-0891 (JP)**

(74) Representative: **Hallybone, Huw George et al**
**Carpmaels and Ransford**
**43-45 Bloomsbury Square**
**London WC1A 2RA (GB)**

# (54) PROCESS FOR PRODUCING POLYLACTIC ACID

(57) A method of manufacturing polylactic acid having excellent heat resistance and strength without using a harmful solvent and a method of manufacturing a film thereof. An aqueous emulsion of polylactic acid which is suitable for the manufacture of polylactic acid and does not contain a harmful solvent, and a coating agent containing the same.

The method of manufacturing polylactic acid, comprising the steps of:
(1) preparing an aqueous emulsion of poly-L-lactic acid and an aqueous emulsion of poly-D-lactic acid;
(2) mixing them together to prepare a mixed emulsion; and
(3) drying the mixed emulsion.

EP 1 849 833 A1

## Description

TECHNICAL FIELD

The present invention relates to methods of manufacturing polylactic acid and a film thereof.

BACKGROUND ART

Researches into biodegradable polymers such as aliphatic polyesters which degrade in natural environment are now under way energetically from the viewpoint of the protection of natural environment. Since polylactic acid has a high melting point of 130 to 180°C and excellent transparency, it is used as a package material or the like. Lactic acid which is a raw material for polylactic acid is obtained from renewable resources such as vegetables and is highly expected because exhaustible resources such as petroleum are not used.

A biodegradable material is also preferably used as a coating agent for coating the surface of a molded product of polylactic acid, and a coating agent containing an aqueous emulsion of polylactic acid is proposed (patent documents 1 and 2).

Meanwhile, it is known that stereocomplex polylactic acid having a high melting point is obtained by mixing together poly-L-lactic acid and poly-D-lactic acid. As means of manufacturing this stereocomplex polylactic acid, there is proposed a method in which the stereocomplex polylactic acid is formed by dissolving poly-L-lactic acid and poly-D-lactic acid in a solvent such as chloroform (non-patent document 1).

However, as the stereocomplex polylactic acid formed by the above method is hardly soluble in most kinds of solvents, it is difficult to manufacture a coating agent. It is also difficult to coat a molded product surface with this coating agent because the stereocomplex polylactic acid is apt to precipitate. Further, use of a solvent such as chloroform has safety and environmental problems.

(Patent document 1) JP-A 2003-321600
(Patent Document 2) JP 3616465
(Non-patent Document 1) "Polylactic acid-for medical care, preparations and environment" written by Hideto Tsuji and Yoshito Ikada and published by Koubunshi Kankoukai, 1997

DISCLOSURE OF THE INVENTION

It is an object of the present invention to provide a method of manufacturing polylactic acid containing a stereocomplex, which has excellent heat resistance and strength, without using a harmful solvent.

It is another object of the present invention to provide a method of manufacturing a film having excellent heat resistance and strength without using a harmful solvent. It is still another object of the present invention to provide an aqueous emulsion of polylactic acid which does not contain a harmful solvent and is suitable for the manufacture of polylactic acid containing a stereocomplex as well as a coating agent containing the same.

The inventors of the present invention have studied a method of forming a stereocomplex by mixing together poly-L-lactic acid and poly-D-lactic acid under very mild conditions without using a solvent. As a result, they have found that when an aqueous emulsion of poly-L-lactic acid and an aqueous emulsion of poly-D-lactic acid are mixed together, a stable mixed emulsion is obtained. Further, they have found that a stereocomplex is formed in the step of drying the mixed emulsion and have accomplished the present invention.

That is, the present invention is a method of manufacturing polylactic acid, comprising the steps of:

(1) preparing an aqueous emulsion of poly-L-lactic acid and an aqueous emulsion of poly-D-lactic acid;
(2) mixing them together to prepare a mixed emulsion; and
(3) drying the mixed emulsion.

Further, the present invention is a method of manufacturing a film, comprising the steps of;

(1) preparing an aqueous emulsion of poly-L-lactic acid and an aqueous emulsion of poly-D-lactic acid;
(2) mixing them together to prepare a mixed emulsion;
(3-i) applying the mixed emulsion to a substrate; and
(3-ii) drying the coating film of the mixed emulsion.

Further, the present invention includes a mixed emulsion containing an aqueous emulsion of poly-L-lactic acid and an aqueous emulsion of poly-D-lactic acid and a coating agent containing the mixed emulsion.

When polylactic acid manufactured by the method of the present invention is measured by DSC, it has a melting

point peak at 200°C or higher which is much higher than that of ordinary polylactic acid. That is, according to the method of the present invention, there is provided polylactic acid having much higher heat resistance than that of poly-L-lactic acid (or poly-D-lactic acid).

A film formed from an aqueous emulsion of poly-L-lactic acid (or poly-D-lactic acid) alone has low strength and is apt to fall off from the surface of a substrate in a powdery form whereas a film manufactured by the method of the present invention has high strength and can be removed while it maintains its film form.

In the manufacturing method of the present invention, poly-L-lactic acid and poly-D-lactic acid are rarely miscible with each other in the mixed emulsion due to the function of an emulsifier. However, after the mixed emulsion is applied to a substrate, they become miscible with each other in the step of drying and heating the coating film to form a stereocomplex. Since the stereocomplex has a higher melting point than that of poly-L-lactic acid (or poly-D-lactic acid), it is considered that the stereocomplex can raise the melting point of polylactic acid and can improve the heat resistance and strength of polylactic acid.

BRIEF DESCRIPTION OF THE DRAWINGS

Fig. 1 is a graph showing the DSC analytical results of a film obtained in Example 1; and
Fig. 2 is an AFM photomicrograph of the film obtained in Example 1.

BEST MODE FOR CARRYING OUT THE INVENTION

An embodiment of the present invention will be described hereinunder.

<polylactic acid manufacturing method>

The polylactic acid manufacturing method of the present invention comprises the steps of:

(1) preparing an aqueous emulsion of poly-L-lactic acid and an aqueous emulsion of poly-D-lactic acid;
(2) mixing them together to prepare a mixed emulsion; and
(3) drying the mixed emulsion.

[step (1)]

The step (1) is to prepare an aqueous emulsion of poly-L-lactic acid and an aqueous emulsion of poly-D-lactic acid.

(poly-L-lactic acid, poly-D-lactic acid)

Poly-L-lactic acid and poly-D-lactic acid are essentially composed of an L-lactic acid unit and a D-lactic acid unit represented by the following formula, respectively.

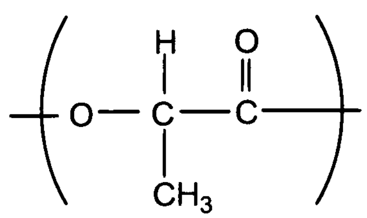

Poly-L-lactic acid comprises preferably 90 to 100 mol%, more preferably 95 to 100 mol%, much more preferably 98 to 100 mol% of the L-lactic acid unit. The other units are a D-lactic acid unit and a comonomer unit other than lactic acid. The total amount of the D-lactic acid unit and the comonomer unit other than lactic acid is preferably 0 to 10 mol%, more preferably 0 to 5 mol%, much more preferably 0 to 2 mol%.

Poly-D-lactic acid comprises 90 to 100 mol%, preferably 95 to 100 mol%, more preferably 98 to 100 mol% of a D-lacic acid unit. The other units are an L-lactic acid unit and a comonomer unit other than lactic acid. The total amount

of the L-lactic acid unit and the comonomer unit other than lactic acid is 0 to 10 mol%, preferably 0 to 5 mol%, more preferably 0 to 2 mol%.

The comonomer unit is a unit derived from a dicarboxylic acid, polyhydric alcohol, hydroxycarboxylic acid or lactone having a functional group capable of forming two or more ester bonds, or a unit derived from a polyester, polyether or polycarbonate which comprises the above constituent components.

Examples of the dicarboxylic acid include succinic acid, adipic acid, azelaic acid, sebacic acid, terephthalic acid and isophthalic acid. Examples of the polyhydric alcohol include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as adduct of bisphenol with ethylene oxide. Examples of the hydroxycarboxylic acid include glycolic acid and hydroxybutyric acid. Examples of the lactone include glycolide, ε-caprolactone glycolide, ε-caprolactone, β-propiolactone, δ-butyrolactone, β- or γ-butyrolactone, pivalolactone and δ-valerolactone.

The weight average molecular weights (Mw) of poly-L-lactic acid and poly-D-lactic acid are each preferably 5,000 to 1,000,000, more preferably 10,000 to 200, 000. The molecular weight distribution is in the range of preferably 1.5 to 2.5, more preferably 1.5 to 1.8. The weight average molecular weight is a weight average molecular weight value in terms of standard polystyrene measured by gel permeation chromatography (GPC) using chloroform as an eluent.

Poly-L-lactic acid and poly-D-lactic acid can be manufactured by known methods. For example, they can be manufactured by heating L-lactide and D-lactide in the presence of a metal polymerization catalyst for ring-opening polymerization, respectively. Alternatively, they can be manufactured by crystallizing low molecular weight polylactic acid containing a metal polymerization catalyst and heating it under reduced pressure or in an inert gas stream for solid-phase polymerization. Further, they can be manufactured by a direct polymerization method in which lactic acid is dehydrated and condensed in the presence or absence of an organic solvent.

The polymerization reaction can be carried out in a conventionally known reactor. For example, vertical reactors having high-viscosity agitating elements such as helical ribbon elements can be used alone or in combination.

An alcohol may be used as a polymerization initiator. Preferably, the alcohol does not impede the polymerization of polylactic acid and is nonvolatile. Preferred examples of the alcohol include decanol, dodecanol, tetradecanol, hexadecanol and octadecanol.

In the solid-phase polymerization method, a lactic acid polyester having a relatively low molecular weight obtained by the above ring-opening polymerization method or the above lactic acid direct polymerization method is used as a prepolymer. It is preferred from the viewpoint of preventing fusion that the prepolymer should be crystallized at a temperature range of its glass transition temperature (Tg) or higher and lower than its melting point (Tm) in advance. The crystallized prepolymer is filled into a fixed vertical reactor or a rotary reactor, such as a tumbler or kiln, and heated at a temperature of the glass transition temperature (Tg) of the prepolymer or higher and lower than the melting point (Tm). If the polymerization temperature is raised stepwise along with the proceeding of polymerization, there will be no problem. It is also preferred that the inside pressure of the above reactor should be reduced or a heated inert gas stream should be circulated to remove water generated during solid-phase polymerization efficiently.

(aqueous emulsion)

In the step (1), an aqueous emulsion of poly-L-lactic acid and an aqueous emulsion of poly-D-lactic acid are prepared. The aqueous emulsion of poly-L-lactic acid can be prepared by dissolving poly-L-lactic acid in an organic solvent, adding and mixing an emulsifier and water with the resulting solution and removing the organic solvent.

Any organic solvent may be used if it can dissolve and swell poly-L-lactic acid and poly-D-lactic acid. Examples of the organic solvent include toluene, chloroform, methylene chloride, dichloroethane, tetrachloroethane, ethyl acetate and hexafluoroisopropanol which may be used alone or in combination of two or more. The organic solvent is used in an amount of preferably 80 to 1,000 parts by weight, more preferably 100 to 500 parts by weight based on 100 parts by weight of poly-L-lactic acid.

As the emulsifier may be used a nonionic surfactant or ionic surfactant. Examples of the ionic surfactant include anionic emulsifiers such as fatty acid salts, ether carboxylates, alkenyl succinates, alkyl sulfates, alkyl polyoxyethylene phosphates, (meth)acrylic acid polymers, maleic acid polymers, formalin condensates of naphthalene sulfonates, salts of formaldehyde condensates of naphthalene sulfonic acid, half esters of polyoxyethylene alkyl ether sulfosuccinic acid, α-olefinsulfonic acid, alkyl sulfates, alkylphenyl sulfates and polyoxyethylene alkyl ether sulfates, cationic acrylic monomers such as dimethylaminoethyl methacrylate, diethylaminoethyl methacrylate, dimethylaminopropyl methacrylate, dimethylaminoethyl acrylate, diethylaminoethyl acrylate, dimethyalminopropyl acrylate, dimethylaminomethyl methacrylamide, dimethylaminoethyl methacrylamide, dimethylaminopropyl methacrylamide, dimethylaminomethyl acrylamide, dimethylaminoethyl acrylamide and dimethylaminopropyl acrylamide, cationic emulsifiers such as quaternary ammonium salts including dimethylaminoethyl methyl chloride methacrylate, diethylaminoethyl dimethylsulfuric acid methacrylate and dimethylaminopropyl chloroacetic acid methacrylate obtained by reacting an alkyl halide, dialkylsulfuric acid and

monochloroacetic acid with these cationic acrylic monomers, and polyoxyethylene alkyl ethers, polyoxyethylene alkylphenyl ethers, polyoxyethylene alkylamine ethers, polyoxyethylene fatty acid esters, sorbitan fatty acid esters, polyoxyethylene sorbitan fatty acid esters and cane sugar fatty acid esters. Out of these, nonionic surfactants such as polyoxyethylene lauryl ethers and polyoxyethylene sorbitan fatty acid esters and other known emulsifiers may be used. Anionic emulsifiers and nonionic emulsifiers are preferred, and anionic emulsifiers are more preferred. The amount of the emulsifier is preferably 0.1 to 40 parts by weight, more preferably 1 to 30 parts by weight based on 100 parts by weight of poly-L-lactic acid.

Water is used in an amount of preferably 50 to 10,000 parts by weight, more preferably 100 to 1,500 parts by weight based on 100 parts by weight of poly-L-lactic acid. To prepare the aqueous emulsion, a commonly used method may be used. For instance, after polylactic acid, an emulsifier and a solvent are mixed together, the resulting mixture is mixed with water by means of a suitable mixer under agitation.

Mixing is preferably carried out by means of a homogenizer or ultrasonic stirrer after they are mixed together by means of a stirrer. The organic solvent can be removed under reduced pressure. The aqueous emulsion of poly-D-lactic acid may be prepared in the same manner as the aqueous emulsion of poly-L-lactic acid. The obtained aqueous emulsion has an average particle diameter of preferably 0.05 to 2 μm, more preferably 0.07 to 0.5 μm in an o/w form.

[step (2)]

The step (2) is to mix together the aqueous emulsion of poly-L-lactic acid and the aqueous emulsion of poly-D-lactic acid so as to prepare a mixed emulsion. As for the weight ratio of the former to the latter, the ratio (L/D) of the weight of poly-L-lactic acid contained in the former to the weight of poly-D-lactic acid contained in the latter is preferably 40/60 to 60/40, more preferably 45/55 to 55/45. The obtained aqueous emulsion has an average particle diameter of preferably 0.05 to 2 μm, more preferably 0.07 to 0.5 μm in an o/w form.

[step (3)]

The step (3) is to dry the mixed emulsion. The mixed emulsion may be dried from any state. For example, when it is used as a coating film, the mixed emulsion may be dried after it is applied. In other cases, it may be dried in a mold or a vessel capable retaining its form according to its application purpose. Although drying may be carried out under the condition that the solvent and water as a dispersion medium can be removed, it may be carried out at room temperature or under atmospheric pressure. It may be heated at a temperature higher than the glass transition temperature of the particle. In this case, stereocomplex polylactic acid having a stronger surface can be obtained.

It is considered that poly-L-lactic acid and poly-D-lactic acid are existent in the mixed emulsion and a stereocomplex is formed in the drying step for removing water. The term "stereocomplex" means a crystal structure that poly-L-lactic acid and poly-D-lactic acid form alternating helices. The stereocomplex is formed by interaction between poly-L-lactic acid and poly-D-lactic acid which is stronger than interaction between L units or interaction between D units. It is considered that while poly-L-lactic acid and poly-D-lactic acid are separated from each other by the function of the emulsifier in the state of the mixed emulsion to form micells which are rarely miscible with each other, when the mixed emulsion is dried, the helices of poly-L-lactic acid and poly-D-lactic acid are interacted with each other by the function of the residual emulsifier to form a stereocomplex when they approach each other.

The content of the stereocomplex in the obtained polylactic acid is preferably 50 % or more, more preferably 70 % or more. Melting peaks at 195 °C or higher of the obtained polylactic acid account for preferably 50 % or more, more preferably 70 % or more of the total of all the melting peaks measured by a differential scanning calorimeter (DSC) in the temperature elevation step.

The melting point is in the range of preferably 195 to 250°C, more preferably 200 to 220°C. The melting enthalpy is 20 J/g or more, preferably 30 J/g or more. More specifically, in the measurement by the differential scanning calorimeter (DSC), preferably, melting peaks at 195°C or higher account for 50 % or more of the total of all the melting peaks in the temperature elevation step, the melting point is in the range of 195 to 250°C, and the melting enthalpy is 20 J/g or more.

The weight average molecular weight of the obtained polylactic acid is preferably 5,000 to 1,000,000, more preferably 10,000 to 200,000. The weight average molecular weight is a weight average molecular weight value in terms of standard polystyrene measured by gel permeation chromatography (GPC) using chloroform as an eluent.

<film manufacturing method>

The film manufacturing method of the present invention comprises the steps of:

(1) preparing an aqueous emulsion of poly-L-lactic acid and an aqueous emulsion of poly-D-lactic acid;
(2) mixing them together to prepare a mixed emulsion;

(3-i) applying the mixed emulsion to a substrate; and
(3-ii) drying the coating film of the mixed emulsion.

In the film manufacturing method of the present invention, the steps (1) and (2) are the same as in the above polylactic acid manufacturing method. The film manufacturing method of the present invention includes the step (3-i) of applying the mixed emulsion to the substrate and the step (3-ii) of drying the coating film of the mixed emulsion.
The application step (3-i) can be carried out by casting the mixed emulsion over the substrate. The mixed emulsion may be cast by extruding it from a die or by doctor blade coating or spin coating. Examples of the substrate include glass plates, metal plates and synthetic resin plates. The drying step (3-ii) may be carried out at room temperature under atmospheric pressure.
The thickness of the film obtained by this method is preferably 5 to 200 μm, more preferably 10 to 100 μm. Therefore, the thickness of the mixed emulsion to be applied to the substrate can be adjusted in consideration of the amount of polylactic acid contained in the mixed emulsion. The film contains stereocomplex polylactic acid like the above polylactic acid and has the same weight average molecular weight and thermal properties measured by DSC as the polylactic acid.

<mixed emulsion>

The mixed emulsion of the present invention contains an aqueous emulsion of poly-L-lactic acid and an aqueous emulsion of poly-D-lactic acid. Each of the aqueous emulsions contains poly-L-lactic acid (or poly-D-lactic acid), an emulsifier and water. Poly-L-lactic acid (or poly-D-lactic acid) and the emulsifier have already been described in the section for the polylactic acid manufacturing method. The emulsifier is contained in an amount of preferably 0.1 to 40 parts by weight, more preferably 1 to 30 parts by weight based on 100 parts by weight of polylactic acid. Water is contained in an amount of preferably 50 to 10,000 parts by weight, more preferably 100 to 1,500 parts by weight based on 100 parts by weight of poly-L-lactic acid (or poly-D-lactic acid).
The weight ratio (L/D) of poly-L-lactic acid to poly-D-lactic acid in the mixed emulsion is preferably 40/60 to 60/40, more preferably 45/55 to 55/45. The mixed emulsion has an average particle diameter of preferably 0.05 to 2 μm, more preferably 0.07 to 0.5 μm in an o/w form.
The mixed emulsion can be manufactured by the step (1) of preparing an aqueous emulsion of poly-L-lactic acid and an aqueous emulsion of poly-D-lactic acid and the step (2) of mixing them together to manufacture mixed emulsion. The step (1) and the step (2) have already been described in the section for the polylactic acid manufacturing method.

<coating agent>

The coating agent of the present invention contains the above mixed emulsion. The mixed emulsion contains an aqueous emulsion of poly-L-lactic acid and an aqueous emulsion of poly-D-lactic acid. The coating agent of the present invention has a feature that a stereocomplex is formed not at the time of application but at the time of drying after application. That is, a stereocomplex can be formed in situ. Therefore, the coating agent has an advantage that it can be easily applied and can be kept well.
The coating agent may contain a polymer emulsion, a resin emulsion and a rubber-based latex. These components are contained in a total amount of preferably 5 to 200 parts by weight based on 100 parts by weight of the mixed emulsion. Besides these, the coating agent may optionally contain known additives such as a thickener, anti-foaming agent, antioxidant, ultraviolet light absorber, water resistant additive, antiseptic agent, antirust, pigment and dye. The total amount of these components is preferably 0.1 to 20 parts by weight based on 100 parts by weight of the mixed emulsion.

Examples

The following examples are given to further illustrate the present invention. In the following examples, physical properties were measured by the following methods.

(1) Measurement of weight average molecular weight (Mw)
50 mg of the sample was dissolved in 5 ml of chloroform, and chloroform heated at 40°C was used as a carrier to obtain the weight average molecular weight (Mw) of the sample by using the GPC-11 of Showdex Co., Ltd. The weight average molecular weight (Mw) was calculated as a value in terms of polystyrene.
(2) Thermal properties
The thermal properties were measured by using the DSC-60 differential scanning calorimeter of Shimadzu Corporation. 10 mg of the sample was heated from room temperature up to 250°C at a temperature elevation rate of 10 °C/min in a nitrogen atmosphere. For the first scan, the homocrystal melting temperature (Tmh), homocrystal melting heat (ΔHmh), stereocomplex crystal melting temperature (Tms) and stereocomplex crystal melting heat (ΔHms) were measured.

(3) The stereocomplex content (χc(SC)) was obtained as follows. When the homocrystal melting heat (ΔHmh0) of 100 % crystallized polylactic acid was -203.4 J/g and the stereocomplex crystal melting heat (ΔHms0) of 100 % crystallized polylactic acid was -142 J/g, the stereocomplex content was calculated from the homocrystal melting heat (Δ Hmh) obtained substantially from DSC and the stereocomplex crystal melting heat (ΔHms) based on the following equation.

$$\chi c(SC)\ (\%) = 100 \times [(\Delta Hms)/(\Delta Hms0)/(\Delta Hmh/\Delta Hmh0+\Delta Hms/\Delta Hms0)]$$

(4) ratio of melting peaks at 195°C or higher (R195 or more)

The ratio (%) of melting peaks at 195°C or higher was calculated from the area of the melting peaks at 195°C or higher (high temperature) and the area of melting peaks at 140 to 180°C (low temperature) based on the following equation.

$$R195\ \text{or more}\ (\%) = A195\ \text{or more}/(A195\ \text{or more} + A140\sim180) \times 100$$

R195 or more: ratio of melting peaks at 195°C or higher
A195 or more: area of melting peaks at 195°C or higher
A140-180: area of melting peaks at 140 to 180°C

(5) Optical purity (%)

The optical purity was obtained from the ratio of L-lactic acid and D-lactic acid constituting poly-L-lactic acid and poly-D-lactic acid. 5 ml of 5M sodium hydroxide and 2.5 ml of isopropanol were added to 1 g of the sample to hydrolyze it while they were heated at 40°C under agitation, and the resulting reaction solution was neutralized with 1 M sulfuric acid. The concentration of the solution was adjusted by diluting 1 ml of the neutralized solution to 25 times. The detection peak areas of L-lactic acid and D-lactic acid were measured with ultraviolet light having a wavelength of 254 nm by HPLC to calculate the optical purity (%) from the weight ratio [L] (%) of L-lactic acid and the weight ratio [D] (%) of D-lactic acid constituting a polylactic acid polymer based on the following equation.

The LC-6A pump of Shimadzu Corporation, the SPD-6AV UV detector of Shimadzu Corporation and the SUMICHIRAL OA-5000 column of Sumika Bunseki Center Co., Ltd. were used as an HPLC apparatus and a 1mM aqueous solution of copper sulfate was used as an eluent to measure the optical purity at a flow rate of 1.0 ml/min and 40°C.

$$\text{Optical purity}\ (\%) = 100 \times [L]/([L] + [D])\ (\text{or}\ 100 \times [D]/([L] + [D])$$

(6) Measurement of wide-angle X-ray diffraction (WAXS)

Wide-angle X-ray diffraction (WAXS) was carried out with Cu-K α-line (wavelength: 0.1542 nm) which was filtered with Ni at a 2θ angle of 6 to 40° at a rate of 2°/min by using the RINT-2100 FSL X-ray diffraction apparatus and the RINT2000 X-ray generator (generating X-rays at 40 kV and 30 mA) of Rigaku Co., Ltd.

(7) AFM measurement

An image of the surface profile of the film was measured in a tapping mode by using the AFM of Shimadzu Corporation.

Example 1

(preparation of an aqueous emulsion of poly-L-lactic acid)

100 parts of poly-L-lactic acid (PLLA: molecular weight of 20,100) was heated at 100°C in 400 parts of toluene,

dissolved in the toluene for about 1 hour and cooled to 80°C. Then, 20 parts in terms of solid of a disodium salt of polyoxyethylene alkylether sulfosuccinic acid as an emulsifier and 1, 000 parts of water were added and violently stirred at 75°C for 1 hour to carry out pre-emulsification. Ultrasonic waves were applied to the obtained pre-emulsified product for 1 hour or more to obtain an emulsified product. The toluene contained in the emulsified product was distilled off under reduced pressure by using an evaporator to obtain an aqueous emulsion of poly-L-lactic acid having a solid content of 10 % and an average particle diameter of 0.3 μm (to be referred to as "solution (L1)" hereinafter).

(preparation of an aqueous emulsion of poly-D-lactic acid)

The same operation as above was repeated except that poly-D-lactic acid was used (PDLA: molecular weight of 22,200) to obtain an aqueous emulsion of poly-D-lactic acid having a solid content of 10 % and an average particle diameter of 0.3 μm (to be referred to as "solution (D1)" hereinafter).

(preparation of mixed emulsion)

The obtained solutions (L1) and (D1) were mixed together in a weight ratio of 1:1 to obtain a mixed emulsion.

(application, drying)

The mixed emulsion was cast over a substrate and dried at room temperature to obtain a 35 μm-thick film (E1). Mw of the film (E1) was 21,000.

(physical properties of film (E1))

DSC, wide-angle X-ray diffraction (WAXS) and AFM measurements were made on the film (E1).

The results of the DSC measurement are shown in Fig. 1. The solid line in Fig. 1 is a DSC chart of the film (E1). The dotted line in Fig. 1 is a DSC chart of a film (C1) obtained in Comparative Example 1. The melting point of the film (C1) was about 170°C whereas the melting point of the film (E1) was 209.4°C. It is understood that a film having high heat resistance can be obtained by the present invention. The stereocomplex content of the film (E1) was 76.1 % and the ratio of melting peaks at 195°C or higher of the film (E1) was 69.1 %. In the WAXS measurement of the film (E1), a diffraction peak was seen at 2θ angles of 12°, 21° and 24° and differed from the crystal diffraction peaks of poly-L-lactic acid which appeared at 18.5° and 22.5°. It was confirmed that a stereocomplex was formed.

The AFM measurement result of the surface of the film (E1) is shown in Fig. 2. It is understood that the film (E1) had a smooth surface structure.

Example 2

(preparation of an aqueous emulsion of poly-L-lactic acid)

100 parts of poly-L-lactic acid (PLLA: molecular weight of 71, 000) was dissolved in toluene (460 parts) at 100°C and then cooled to 80°C, and an emulsifier (20 parts of polyoxyethylene alkylether sulfosuccinic acid) and distilled water (1,000 parts) were added to the resulting solution. After the solution was stirred at 75°C for 1 hour to carry out pre-emulsification, ultrasonic waves were applied to the pre-emulsion for 1 hour or more to emulsify the pre-emulsion. Thereafter, vacuum distillation was carried out by an evaporator to obtain a poly-L-lactic acid emulsion having a solid content of 10 % and an average particle diameter of 0.3 μm (to be referred to as "solution (L2)" hereinafter).

(preparation of an aqueous emulsion of poly-D-lactic acid)

The same operation as above was repeated except that poly-D-lactic acid (PDLA: molecular weight of 75,000) was used to obtain an aqueous emulsion of poly-D-lactic acid having a solid content of 10 % and an average particle diameter of 0.3 μm (to be referred to as "solution (D2)" hereinafter).

(preparation of mixed emulsion)

The obtained solutions (L2) and (D2) were mixed together in a weight ratio of 1:1 to obtain a mixed emulsion.

(application, drying)

The mixed emulsion was cast over a substrate and dried to obtain a film (E2). Mw of the film (E2) was 73,000. The stereocomplex content of the film (E2) was 73.2 %, and the ratio of melting peaks at 195°C or higher of the film (E2) was 66.3 %.

Comparative Example 1

Only the solution L obtained in Example 1 was cast over a substrate and dried to obtain a poly-L-lactic acid film (C1). The DSC measurement result of the film (C1) is shown in Fig. 1 (dotted line). The melting point of the film (C1) was 172.3°C.

When the film (E1) obtained in Example 1 and the film (C1) obtained in Comparative Example 1 were left in water, the film (C1) fell off in a powdery form and the film (E1) did not change in shape. It is thereby understood that the strength of the polylactic acid film was improved by the formation of a stereocomplex.

Effect of the Invention

According to the method of the present invention, polylactic acid and a film thereof are obtained without using a harmful solvent. According to the method of the present invention, polylactic acid and a film thereof having excellent heat resistance and strength are obtained.

A coating film of polylactic acid containing a stereocomplex and having high heat resistance can be formed from the mixed emulsion of the present invention or a coating agent containing the same. Since the coating agent of the present invention has excellent biodegradability, it can be applied to a biodegradable molded product and has an environmental effect that a coating film thereof is degraded at the same time as the biodegradable molded product.

Industrial Feasibility

The method and coating agent of the present invention can be used to coat paper materials such as paper packs, corrugated cardboards and paper bags and molded articles of biodegradable plastics. The polylactic acid containing a stereocomplex of the present invention can be advantageously used in films, coatings, adhesives, paints, binders and protective films.

## Claims

**1.** A method of manufacturing polylactic acid, comprising the steps of:

(1) preparing an aqueous emulsion of poly-L-lactic acid and an aqueous emulsion of poly-D-lactic acid;
(2) mixing them together to prepare a mixed emulsion; and
(3) drying the mixed emulsion.

**2.** The method according to claim 1, wherein the aqueous emulsion of poly-L-lactic acid contains 50 to 10,000 parts by weight of water based on 100 parts by weight of poly-L-lactic acid and the aqueous emulsion of poly-D-lactic acid contains 50 to 10,000 parts by weight of water based on 100 parts by weight of poly-D-lactic acid.

**3.** The method according to claim 1, wherein the weight average molecular weights of poly-L-lactic acid and poly-D-lactic acid are each 5,000 to 1,000,000.

**4.** The method according to claim 1, wherein the melting point measured by a differential scanning calorimeter (DSC) of the obtained polylactic acid is 195 to 250°C.

**5.** A method of manufacturing a film, comprising the steps of;

(1) preparing an aqueous emulsion of poly-L-lactic acid and an aqueous emulsion of poly-D-lactic acid;
(2) mixing them together to prepare a mixed emulsion;
(3-i) applying the mixed emulsion to a substrate; and
(3-ii) drying the coating film of the mixed emulsion.

6. The method according to claim 5, wherein the aqueous emulsion of poly-L-lactic acid contains 50 to 10,000 parts by weight of water based on 100 parts by weight of poly-L-lactic acid and the aqueous emulsion of poly-D-lactic acid contains 50 to 10,000 parts by weight of water based on 100 parts by weight of poly-D-lactic acid.

7. The method according to claim 5, wherein the weight average molecular weights of poly-L-lactic acid and poly-D-lactic acid are each 5;000 to 1,000,000.

8. The method according to claim 5, wherein the melting point measured by a differential scanning calorimeter (DSC) of the film is 195 to 250°C.

9. A mixed emulsion containing an aqueous emulsion of poly-L-lactic acid and an aqueous emulsion of poly-D-lactic acid.

10. The mixed emulsion according to claim 9, wherein the aqueous emulsion of poly-L-lactic acid contains 50 to 10, 000 parts by weight of water based on 100 parts by weight of poly-L-lactic acid and the aqueous emulsion of poly-D-lactic acid contains 50 to 10,000 parts by weight of water based on 100 parts by weight of poly-D-lactic acid.

11. The mixed emulsion according to claim 9, wherein the weight average molecular weights of poly-L-lactic acid and poly-D-lactic acid are each 5,000 to 1,000,000.

12. A coating agent containing the mixed emulsion of claim 9.

Fig. 1

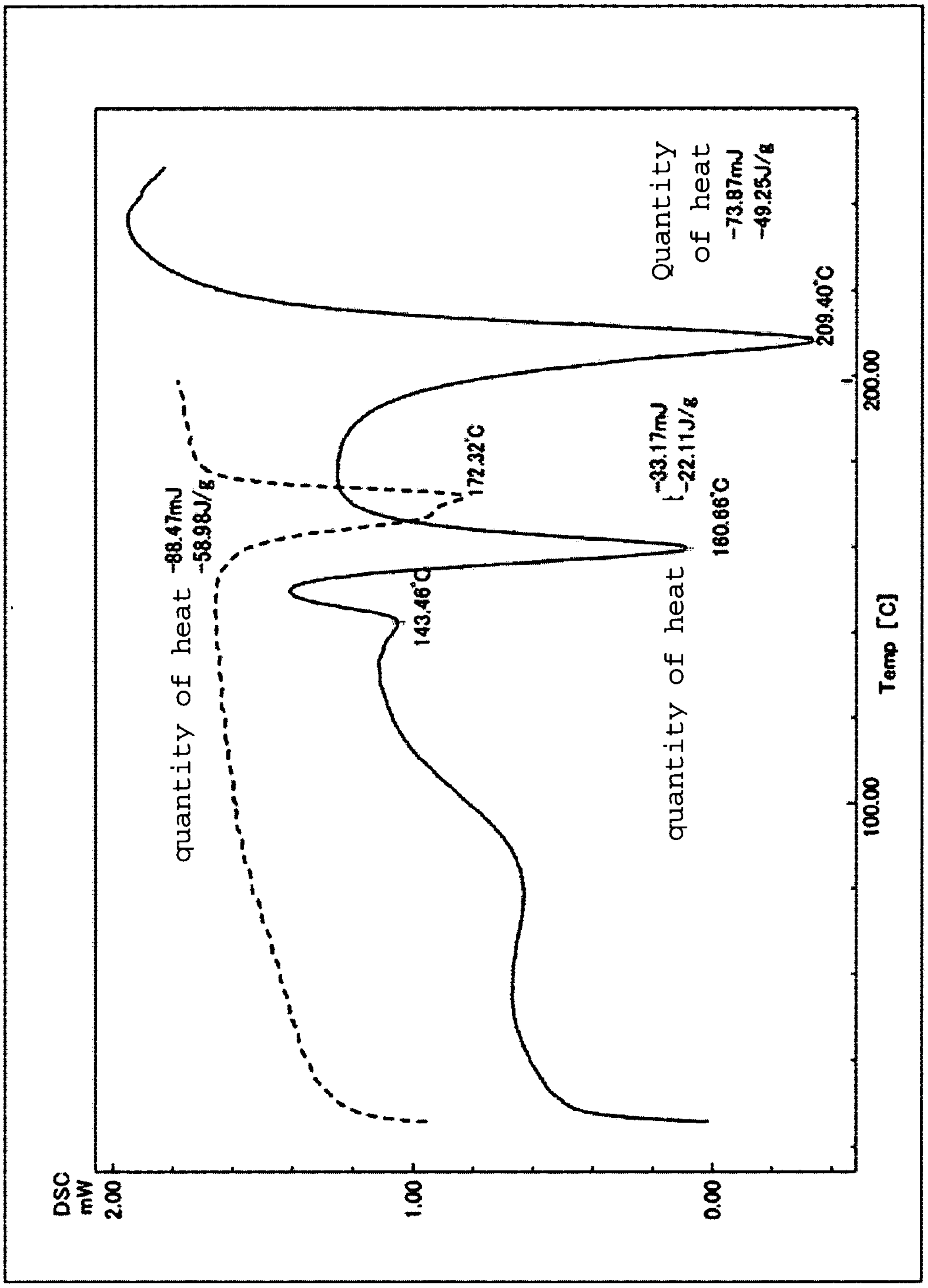
DSC
mW
2.00
1.00
0.00
100.00
200.00
Temp [C]
quantity of heat
-88.47mJ
-58.98J/g
172.32°C
143.46°C
160.66°C
quantity of heat
-33.17mJ
-22.11J/g
209.40°C
Quantity
of heat
-73.87mJ
-49.25J/g

Fig. 2

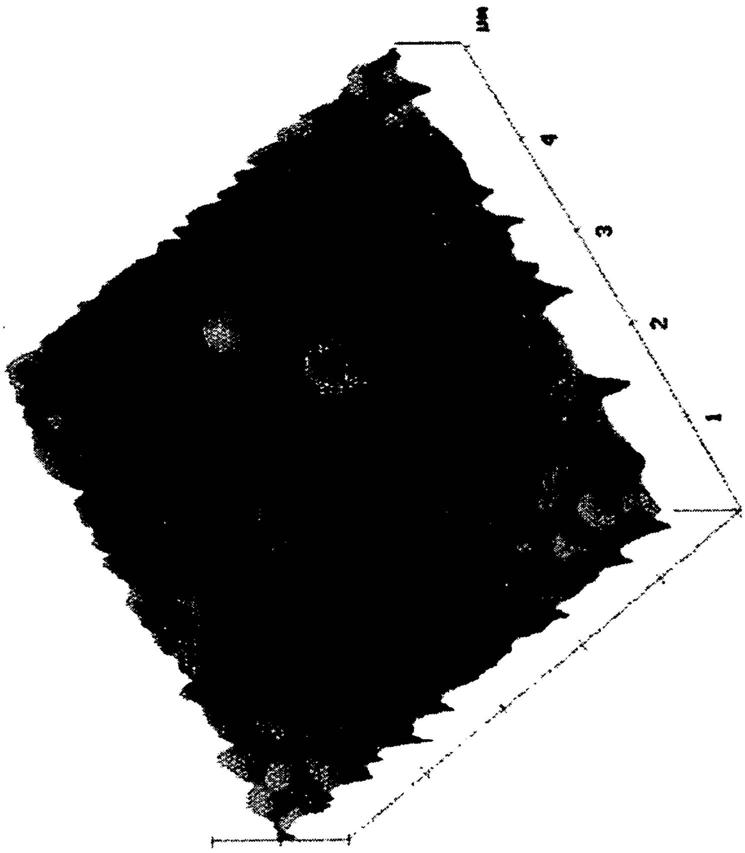

**INTERNATIONAL SEARCH REPORT**

International application No.
PCT/JP2006/303347

A. CLASSIFICATION OF SUBJECT MATTER
*C08L67/04*(2006.01), *B05D7/24*(2006.01), *C08J3/03*(2006.01), *C08J5/18*(2006.01), *C09D167/04*(2006.01), C08L101/16(2006.01)

According to International Patent Classification (IPC) or to both national classification and IPC

B. FIELDS SEARCHED

Minimum documentation searched (classification system followed by classification symbols)
C08J3/03-07, C08J5/18, C08L67/04, C09D167/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-323640 A (Sumitomo Seika Chemicals Co., Ltd.), 18 November, 2004 (18.11.04), Claims 1, 7; Par. No. [0008] (Family: none) | 1-12 |
| A | JP 2003-96285 A (Toray Industries, Inc.), 03 April, 2003 (03.04.03), Claim 1 (Family: none) | 1-12 |
| A | JP 2001-11294 A (Miyoshi Oil & Fat Co., Ltd.), 16 January, 2001 (16.01.01), Claims 1, 2 (Family: none) | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 March, 2006 (13.03.06) | Date of mailing of the international search report<br>20 March, 2006 (20.03.06) |
| Name and mailing address of the ISA/<br>Japanese Patent Office<br><br>Facsimile No. | Authorized officer<br><br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003321600 A
- JP 3616465 B